(19) Europäisches Patentamt

European Patent Office

Office européen des brevets

(11) **EP 0 886 163 B1**

(12) **EUROPÄISCHE PATENTSCHRIFT**

(45) Veröffentlichungstag und Bekanntmachung des Hinweises auf die Patenterteilung:
**14.04.2004 Patentblatt 2004/16**

(51) Int Cl.$^7$: **G02B 27/34**

(21) Anmeldenummer: **98110399.7**

(22) Anmeldetag: **06.06.1998**

(54) **Strichplatte und optische Einrichtung mit einer beleuchtbaren Strichplatte**

Fiducial mark and optical system having a fiducial mark capable to be illuminated

Point de repère et système oiptique à point de repère éclairable

(84) Benannte Vertragsstaaten:
**AT CH DE FR GB IT LI**

(30) Priorität: **21.06.1997 DE 19726397**

(43) Veröffentlichungstag der Anmeldung:
**23.12.1998 Patentblatt 1998/52**

(73) Patentinhaber: **Dr. Johannes Heidenhain GmbH**
**83292 Traunreut (DE)**

(72) Erfinder:
• **Allgäuer, Michael, Dipl.-Phys.**
**83371 Stein/Traun (DE)**
• **Franz, Andreas, Dr.**
**83308 Trostberg (DE)**
• **Michel, Dieter, Dipl.-Ing.**
**83278 Traunstein (DE)**
• **Tovar, Heinz**
**83278 Traunstein (DE)**

(56) Entgegenhaltungen:
DE-A- 2 529 418     DE-A- 3 129 357
DE-A- 3 731 416     DE-U- 8 702 309
US-A- 4 165 930     US-A- 4 255 032
US-A- 5 349 179     US-A- 5 483 362

• **NAUMANN/SCHRÖDER: "Bauelemente der technischen Optik" 1992 , CARL HANSER VERLAG , MÜNCHEN WIEN XP002146704 * Kapitel 13.1 "Strichmarken, Zielmarken und Testobjekte" ***

**Beschreibung**

Die Erfindung betrifft eine Strichplatte gemäß des Anspruches 1 und eine optische Einrichtung gemäß des Anspruches 10.

Optische Einrichtungen, bei denen Strichplatten eingesetzt werden, sind Beobachtungs- und Zielgeräte, wie z.B. Teleskope, Entfernungsmesser, Mikroskope und Fernrohre, insbesondere Zielfernrohre. Diese optischen Einrichtungen besitzen eine Abbildungsoptik, um ein Objekt dem Auge des Betrachters vergrößert darzustellen. In vielen Fällen ist es erforderlich, die optische Einrichtung, insbesondere die optische Achse der optischen Einrichtung, gezielt auf einen bestimmten Bereich des Objektes auszurichten. Hierzu befindet sich im Beobachtungsstrahlengang eine abzusehende Markierung in Form einer Strichplatte. Als Strichplatten werden Teile bezeichnet, bei denen absehbare Markierungen auf einem Träger aufgebracht sind. Beispiele derartiger Markierungen sind in dem Buch: Naumann, Schröder; Bauelemente der Optik; 4. Ausgabe, Seiten 426, 427 beschrieben und dargestellt.

Damit die Markierung vom Beobachter gut erkannt wird, muß sie sich vom Hintergrund gut abheben, das heißt es muß ein guter Kontrast zwischen dem Bild des zu beobachtenden Objektes und dem Bild der Markierung vorhanden sein. Um diesen Kontrast auch bei schlechten Lichtverhältnissen zu erhalten, werden beleuchtete Markierungen eingesetzt. In dem Buch: Naumann, Schröder; Bauelemente der Optik; 4. Ausgabe, Seite 428 ist eine derartige beleuchtete Markierung dargestellt. Die Beleuchtung erfolgt durch eine seitlich angebrachte Lampe. Die Helligkeit der Lampe kann manuell oder automatisch geregelt sein, um die Helligkeit der Markierung der Umgebungshelligkeit, bzw. der Helligkeit des Objektbildes anzupassen und somit Blendungen des Auges zu vermeiden.

Diese Markierungen werden üblicherweise in eine Glasplatte eingeätzt und mit einem Pigment aus z. B. Titandioxid und Bindemittel ausgefüllt, wie in der DE 37 31 416 A1 beschrieben. Bei Tageslicht erscheint die Markierung dunkel und bei Beleuchtung mit einer Lichtquelle hebt sie sich aufgrund von Lichtstreuung und Lichtbeugung an den Pigmenten des Füllmaterials hell vom Hintergrund ab. Eine optische Einrichtung mit einer derartigen Markierung ist auch in der DE 25 29 418 A1 beschrieben.

Der Nachteil derartiger Markierungen ist die relativ aufwendige Herstellung, der geringe Wirkungsgrad bei Beleuchtung sowie die nicht homogene Lichtabstrahlung der Markierung über ihre gesamte Fläche.

In der DE 31 29 357 A1, der US 4,165,930 und der US 4,255,032 sind beleuchtbare Markierungen für Kameras beschrieben, die als Beugungsgitter ausgebildet sind. Die Beugungsgitter sind in Form von Relief- oder Volumenhologrammen realisiert und so ausgebildet, daß die Markierungen nur bei Beleuchtung vom Beobachter sichtbar sind und das vom Objekt kommende Licht innerhalb der Markierung nur geringfügig (ca. 4%) geschwächt wird. Diese Markierungen sind relativ aufwendig herstellbar und dienen nur zum Einblenden von sachlichen Informationen und nicht zum gezielten Ausrichten einer optischen Einrichtung auf einen Bereich eines Objektes.

Aufgabe der Erfindung ist es, eine Strichplatte mit einer beleuchtbaren Markierung für eine optische Einrichtung anzugeben, die im beleuchteten sowie nicht beleuchteten Zustand gut sichtbar ist, die einen hohen Wirkungsgrad bei Beleuchtung besitzt und die einfach herstellbar ist.

Diese Aufgabe wird durch die Merkmale des Anspruches 1 gelöst.

Weiterhin ist es Aufgabe der Erfindung, eine optische Einrichtung mit einer im Beobachtungsstrahlengang befindlichen beleuchtbaren Markierung anzugeben, wobei die Markierung im nicht beleuchteten sowie im beleuchteten Zustand vom Beobachter gut sichtbar und die einfach herstellbar sein soll.

Diese Aufgabe wird durch die Merkmale des Anspruches 10 gelöst.

Vorteilhafte Ausgestaltungen sind in den abhängigen Ansprüchen angegeben.

Ausführungsbeispiele werden anhand der Zeichnungen näher erläutert, es zeigt,

Figur 1 ein erstes Ausführungsbeispiel einer Strichplatte mit einer beleuchtbaren Markierung in Draufsicht,

Figur 2 die Strichplatte gemäß Figur 1 im Querschnitt,

Figur 3 ein zweites Ausführungsbeispiel einer Strichplatte in Draufsicht,

Figur 4 ein drittes Ausführungsbeispiel einer Strichplatte in Draufsicht,

Figur 5 ein viertes Ausführungsbeispiel einer Strichplatte in Draufsicht,

Figur 6 ein fünftes Ausführungsbeispiel einer Strichplatte in Draufsicht,

Figur 7 ein sechstes Ausführungsbeispiel einer Strichplatte in Draufsicht,

Figur 8 die Strichplatte gemäß Figur 7 im Querschnitt,

Figur 9 ein siebtes Ausführungsbeispiel einer Strichplatte im Querschnitt,

Figur 10 ein achtes Ausführungsbeispiel einer Strichplatte im Querschnitt,

Figur 11    ein Zielfernrohr mit einer Strichplatte.

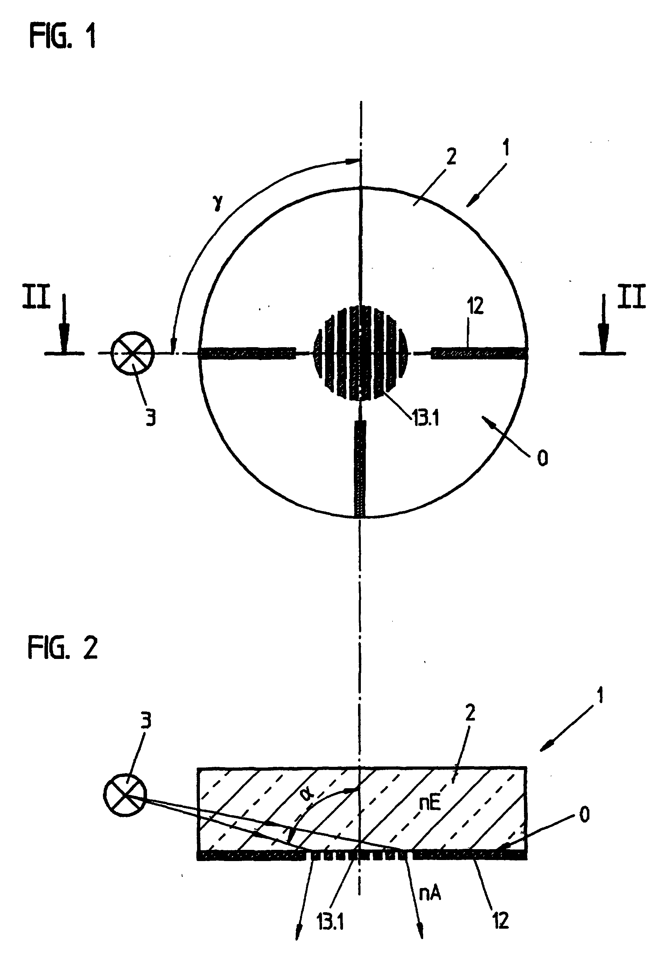

Die Figuren 1 und 2 zeigen eine erfindungsgemäße Strichplatte 1 mit einer Zielmarke für ein Zielfernrohr. Die Strichplatte 1 besteht aus einem transparenten Träger 2, insbesondere aus Glas, auf dessen Oberfläche O in an sich bekannter Weise durch lithografische Verfahrensprozesse die Striche 12 der Zielmarke aufgebracht werden. Die Striche 12 sollen eine Art Fadenkreuz darstellen und bestehen aus lichtundurchlässigem Material. Im Zentrum des Fadenkreuzes 12 ist eine Markierung 13.1 mit einer kreisringförmigen Kontur auf der Oberfläche O aufgebracht. Diese Markierung 13.1 besteht aus einem Beugungsgitter mit abwechselnd angeordneten transparenten Lücken und lichtundurchlässigen Stegen. Zur Erzielung eines hohen Kontrastes der Markierung 13.1 gegenüber dem Umfeld sollte das Verhältnis der Breite der opaken Stege zur Breite der transparenten Lücken größer oder gleich 1 zu 1 sein. Die Teilungsperiode g dieses Amplitudengitters ist in Abhängigkeit von der Wellenlänge $\lambda$ und dem Ort einer seitlich in den Träger 2 strahlenden Lichtquelle 3 optimiert, so daß möglichst viel Licht der Lichtquelle 3 senkrecht zur Oberfläche O des Trägers 2 abgebeugt wird. Aus der Beugungstheorie ist bekannt, daß die 1. Beugungsordnung eine besonders hohe Lichtintensität aufweist. Man wird das Amplitudengitter demnach so dimensionieren, daß eine der 1. Beugungsordnungen zumindest annähernd senkrecht ($\beta$ = 0°) abgebeugt wird. Aus der Beugungsformel

$$g (n_A \sin \beta - n_E \sin \alpha) = \lambda$$

ergibt sich für das dargestellte Durchlicht-Beugungsgitter eine Teilungsperiode g von etwa 0,5 μm, also kleiner als die Lichtwellenlänge $\lambda$, bei $n_A$ = 1 (Brechzahl Luft), $\beta$ = 0°, $n_E$= 1,5 (Brechzahl Glas), $\alpha \geq$ 60° und $\lambda$ = 640 nm. Bei der Verwendung einer Lichtquelle 3, die im wesentlichen ein Licht der Wellenlänge $\lambda$ = 640 nm aussendet, erscheint die kreisringförmige Markierung 13.1 bei Beleuchtung durch die Lichtquelle 3 als homogen rot leuchtender Punkt (Kreisfläche). Ist die Lichtquelle 3 nicht eingeschaltet, dann erscheint die Markierung 13.1 aufgrund der kleinen Teilungsperiode g als homogener dunkler punktförmiger Fleck.

Dieses erste Ausführungsbeispiel der erfindungsgemäß ausgebildeten Zielmarke hat den Vorteil, daß das Fadenkreuz 12 sowie die Gitterstege der Markierung 13.1 in einem gemeinsamen Fertigungsprozeß hergestellt werden können. Auf die ebene Oberfläche O des Trägers 2 wird eine dünne Chromschicht ganzflächig aufgebracht, und in einem Maskierungsprozeß sowie einem anschließenden Ätzprozeß die Chromschicht außerhalb der Striche des Fadenkreuzes 12 und der Gitterstege der Markierung 13.1 wieder entfernt.

Vorteilhaft ist, wenn die Gitterstege aus einem Material bestehen, dessen Lichtdurchlässigkeit äußerst gering ist (< 10 %).

Um das Licht der Lichtquelle 3 gezielt in Richtung des Auges eines Beobachters abzulenken, sollen die Gitterstege des Beugungsgitters derart verlaufen, daß sie bezüglich der Lage der Lichtquelle 3 einen Winkel von zumindest annähernd $\gamma$ = 90° einschließen, wie in Figur 1 dargestellt ist.

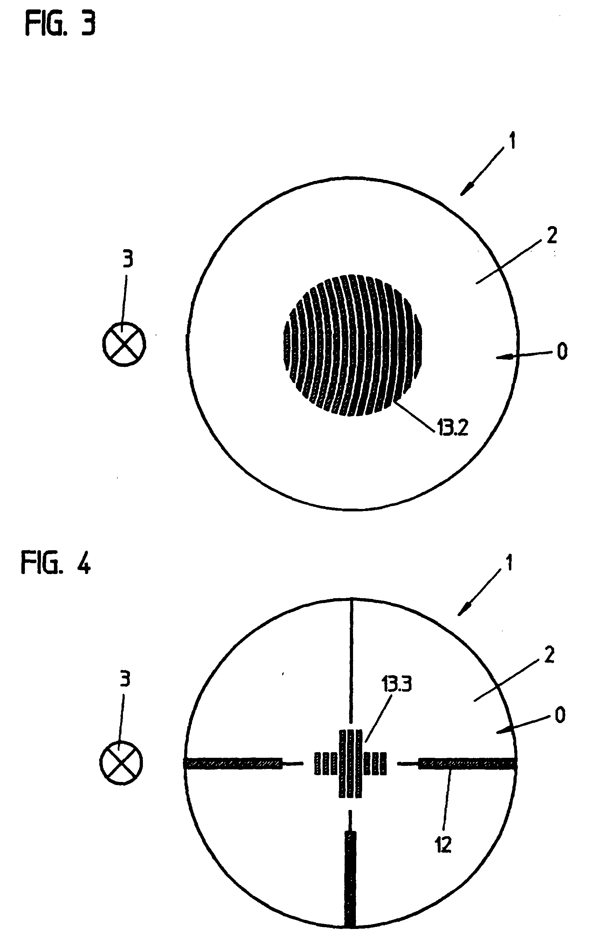

Die Gitterstege können auch gemäß Figur 3 derart ausgebildet sein, daß das Beugungsgitter abbildende Eigenschaften besitzt. Hierzu sind die Gitterstege der Markierung 13.2 gekrümmt ausgebildet. Der Krümmungsmittelpunkt der Gitterstege liegt etwa im Zentrum der Lichtquelle 3. Durch diese Maßnahme werden die von den Gitterstegen der Markierung 13.2 ausgehenden Lichtstrahlen gebündelt und die Markierung 13.2 erscheint bereits bei geringer Beleuchtung besonders hell und homogen.

Die in Figur 1 und 2 dargestellte Zielmarke wird auch als Absehen 4 bezeichnet. Die Erfindung ist aber nicht auf diese spezielle Zielmarke beschränkt, es können auch andere Zielmarken (Absehen) erfindungsgemäß ausgebildet sein. Eine weitere weit verbreitete Zielmarke ist das Absehen, das in Figur 4 dargestellt ist. Der mittlere Bereich dieser Zielmarke ist als kreuzförmige Markierung 13.3 ausgebildet. Erfindungsgemäß ist innerhalb dieser kreuzförmigen Außenkontur ein Beugungsgitter aus abwechselnd opaken und transparenten Strichen vorgesehen.

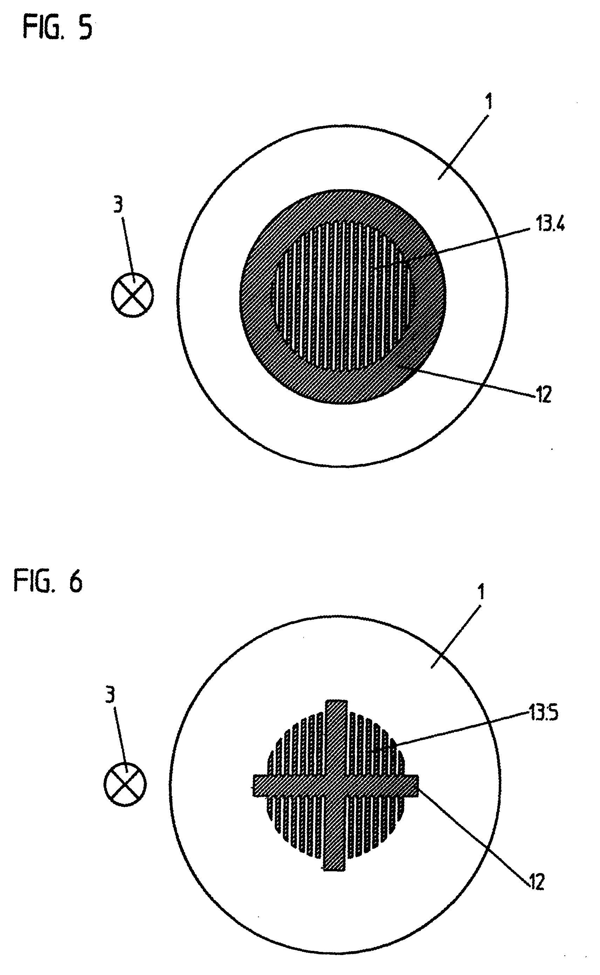

In Figur 5 ist ein weiteres Ausführungsbeispiel einer Strichplatte 1 dargestellt. Die Zielmarke besteht aus einer kreisringförmigen Markierung 13.4, die erfindungsgemäß ein Beugungsgitter aufweist. In der Praxis hat sich gezeigt, daß die beleuchtete Markierung möglichst klein sein soll, um das Auge des Beobachters nicht zu blenden und das Umfeld nicht zu sehr zu überstrahlen. Deshalb ist bei diesem Beispiel der Durchmesser der Markierung 13.4 besonders klein, z. B. 40 μm. Um diese Markierung 13.4 im beleuchteten Zustand sowie im nicht beleuchteten Zustand besonders gut und kontrastreich erkennen zu können, ist sie mit einem opaken Bereich 12 umgeben. Dieser ringförmige Bereich 12 und die opaken Gitterstege des Beugungsgitters bestehen vorteilhafterweise aus dem gleichen opaken Material und lassen sich besonders einfach in einem einzigen Verfahrensprozeß auf die Oberfläche O aufbringen.

Das Beispiel in Figur 6 zeigt eine weitere fertigungstechnisch besonders leicht herstellbare und für die Praxis gut brauchbare Strichplatte. Auf der Oberfläche O sind die opaken Striche 12 eines Fadenkreuzes und die opaken Gitterstege des Beugungsgitters der Markierung 13.5 aufgebracht, wie zu Figur 1 beschrieben. Durch die erfindungsgemäße Ausgestaltung der Markierung 13.5 wird es nun in einfacher Weise mit einem einzigen Verfahrensprozeß möglich, innerhalb der Markierung 13.5 opake Bereiche des Fadenkreuzes auszubilden, welche auch bei nicht beleuchteter Markierung 13.5 äußerst gut erkennbar sind.

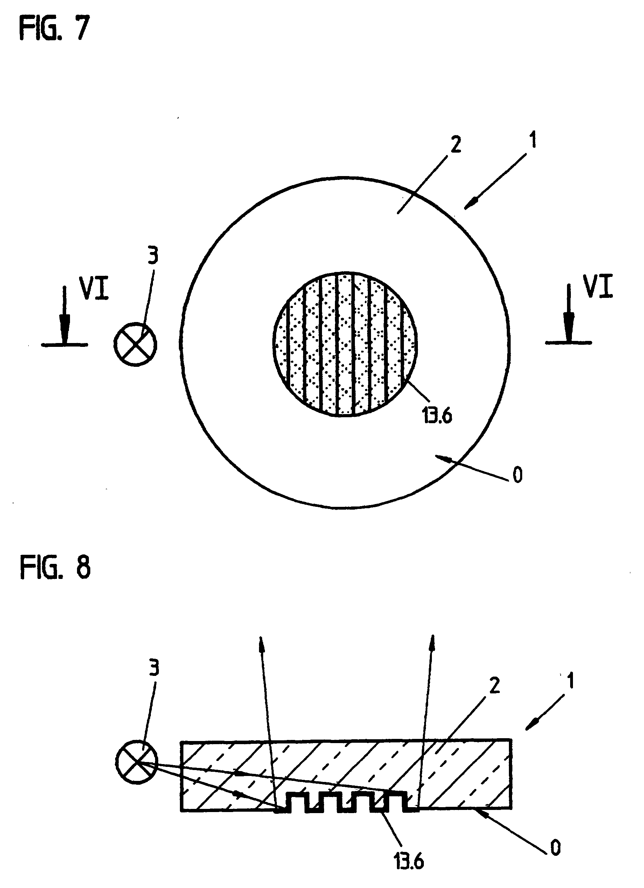

Bei den bisher beschriebenen, fertigungstechnisch besonders vorteilhaft herstellbaren Strichplatten 1 werden die Markierungen 13.1, 13.2, 13.3, 13.4 und 13.5 in Transmission beleuchtet. Anhand eines weiteren, in Figur 7 und 8 dargestellten Ausführungsbeispiels wird gezeigt, daß erfindungsgemäße Markierungen 13 auch in Reflexion betrieben werden können. Besonders vorteilhaft ist es hierbei, wenn die Markierung 13.6 auf der Oberfläche O als Phasengitter ausgebildet ist. Innerhalb der Außenkontur der Markierung 13.6 ist das Phasengitter in Form von rechteckförmigen Vertiefungen und Erhöhungen durch bekannte Techniken, wie Ätzen oder Prägen ausgebildet. Dieses Phasengitter ist mit einer lichtundurchlässigen gut reflektierenden Spiegelschicht - insbesondere Chrom - ganzflächig beschichtet. Die Markierung 13.6 erscheint ohne Beleuchtung als homogener schwarzer bzw. grauer Punkt und bei Beleuchtung mit der Lichtquelle 3 (bei λ = 640 nm) als homogen rot leuchtender Punkt. Das Licht der Lichtquelle 3 wird vom Beugungsgitter der Markierung 13.6 nahezu senkrecht zur Oberfläche O in Richtung des Auges eines Beobachters gerichtet. Die Gitterparameter des Phasengitters sind derart gewählt, daß die Lichtintensität des senkrecht abgebeugten Lichtes auch bei geringer Beleuchtung besonders hoch ist.

In allen dargestellten Beispielen sind die Markierungen 13 vergrößert dargestellt. In der Praxis hat die in den Figuren 1, 2, 3 sowie 5, 6, 7 und 8 dargestellte kreisrigförmige Markierung einen Durchmesser von etwa 20 bis 200 μm. Die gesamte Strichplatte 1 hat zur Verwendung in Zielfernrohren einen Durchmesser von etwa 1 bis 3 cm.

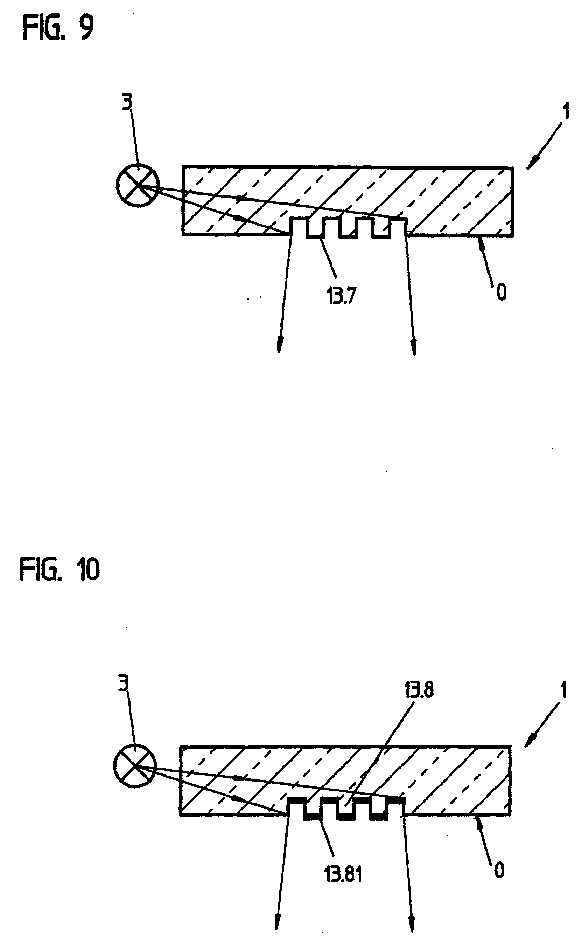

Bei den Beispielen gemäß den Figuren 9 und 10 werden Markierungen 13.7 und 13.8 in Form von Phasengittern vorgeschlagen, die in Transmission beleuchtet werden. Das von der Lichtquelle 3 ausgehende Licht geht durch das Phasengitter hindurch und wird gezielt in Richtung des Beobachters gebeugt. Auch hier sollte das Phasengitter derart dimensioniert sein, daß die intensitätsreiche erste Beugungsordnung senkrecht zur Oberfläche O abgebeugt wird. Um auch im nicht beleuchteten Zustand einen relativ hohen Kontrast der Markierung gegenüber dem Umfeld zu erhalten, ist das Phasengitter in Figur 9 derart dimensioniert, daß es nur Licht vom Objekt einer einzigen Wellenlänge durchläßt. Ist es beispielsweise auf die Wellenlänge von 640 nm optimiert, so erscheint die Markierung 13.7 auch ohne Beleuchtung durch die Lichtquelle 3 als homogen roter Fleck. Das Phasengitter der Markierung 13.7 wirkt für das Objektlicht somit als Filter. Diese Filterwirkung kann auch erreicht werden, wenn dem Phasengitter ein Interferenzfilter 13.81 zugeordnet ist. Dieses Ausführungsbeispiel ist in Figur 10 dargestellt. Die Strichplatte 1 ist im Bereich der Markierung 13.8 mit einem Transmissions-Phasengitter versehen, welches das Licht einer seitlich angeordneten Lichtquelle 3 senkrecht zur Oberfläche O richtet. Auf der Oberfläche dieses Phasengitters ist ein Interferenzfilter aufgebracht, das nur Licht einer Wellenlänge durchläßt, so daß der Bereich der Markierung 13.8 auch allein aufgrund der Objektstrahlung einen Kontrast zum Umfeld aufweist.

In nicht gezeigter Weise ist es auch möglich, mehrere Markierungen 13 auf einer Strichplatte 1 als Beugungsgitter auszubilden, wobei die Gitterparameter so dimensioniert werden können, daß die einen Markierungen unterschiedlich hell und/oder in unterschiedlicher Farbe erscheinen, als die anderen Markierungen der Strichplatte 1. So können beispielsweise zwei Bereiche von Markierungen vorgesehen sein, wobei die Gitterstege des ersten Bereiches gegenüber den Gitterstegen des zweiten Bereiches geneigt sind. Dem ersten Bereich ist eine erste Lichtquelle, welche Licht einer ersten Wellenlänge aussendet zugeordnet und dem zweiten Bereich ist eine zweite Lichtquelle, welche Licht einer zweiten Wellenlänge aussendet zugeordnet. Die beiden Lichtquellen sind räumlich so angeordnet, daß die Gitterstege der beiden Bereiche mit der jeweils zugeordneten Lichtquelle einen Winkel von zumindest annähernd γ = 90° einschließen, wie in Figur 2 für einen Bereich dargestellt.

Zum Schutz der Markierung 13 kann bei allen Ausführungsbeispielen auf die Oberfläche O eine Schutzschicht, ein Deckglas bzw. ein witeres optisches Bauelement aufgebracht sein. Die Glasoberflächen können auch mit Antireflexionsbeschichtungen versehen sein, um das Objektlicht außerhalb der Markierung 13 besonders wenig zu schwächen.

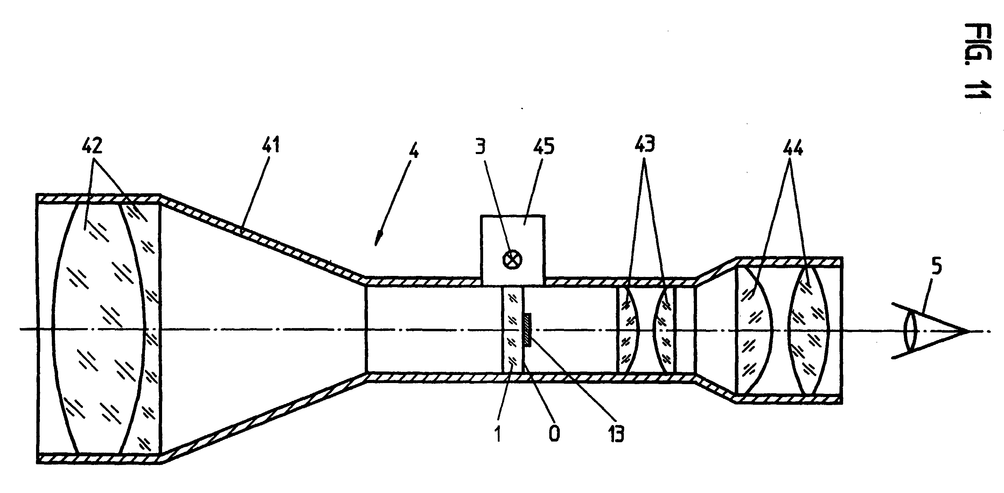

In Figur 11 ist eine besonders vorteilhafte Verwendung einer erfindungsgemäß ausgebildeten Strichplatte 1 bei einem Zielfernrohr 4 dargestellt. Das Zielfernrohr 4 mit bekanntem Aufbau besteht aus einem tubusförmigen Gehäuse 41, einem Objektiv 42, einem Umkehrsystem 43 und einem Okular 44. Die Strichplatte 1 ist im Beobachtungsstrahlengang derart angeordnet, daß die Oberfläche O mit der Markierung 13 in einer Zwischenbildebene liegt. Die Strichplatte 1 ist über eine Einrichtung 45 verstellbar. In dieser Einrichtung 45 ist in vorteilhafter Weise auch gleichzeitig die Lichtquelle 3 zur seitlichen Beleuchtung der Markierung 13 integriert. Die Strichplatte 1 mit der Markierung 13 ist im Beobachtungsstrahlengang (Objekt → Auge 5 des Beobachters) derart eingesetzt, daß das Beugungsgitter der Markierung 13 Licht der Lichtquelle 3 mit hohem Wirkungsgrad zum Auge 5 des Beobachters richtet. Wird die Strichplatte 1 nicht beleuchtet, ist die Markierung 13 vom Auge 5 des Beobachters ebenfalls gut sichtbar, sie hebt sich vom Bild des Objektes kontrastreich ab, da sie relativ wenig Licht vom Objekt durchläßt. Die Lichtdurchlässigkeit (bezogen auf die Objektstrahlung) der Markierung 13 soll bei allen erfindungsgemäß ausgebildeten Strichplatten 1 weniger als 60 % betragen. Die Markierung 13 der Strichplatte 1 eignet sich daher besonders gut, die optische Einrichtung 4 selbst und gegebenenfalls ein mit der optischen Einrichtung verbundenes Gerät (z.B. Schußwaffe) gezielt auf ein Detail eines Objektes auszurichten.

**Patentansprüche**

1. Strichplatte, bestehend aus einem Träger (2) und einer auf einer Oberfläche (O) dieses Trägers (2) aufgebrachten Markierung (13), welche Licht einer seitlich angeordneten Lichtquelle (3) weitgehend senkrecht zur Oberfläche (O) abstrahlt, wobei die Markierung (13) als Beugungsgitter ausgebildet ist, und das Beugungsgitter derart dimensioniert ist, daß bei Betrachtung der Oberfläche (O) die Markierung (13) auch ohne Beleuchtung durch die Lichtquelle (3) einen hohen Kontrast zum Umfeld der Markierung (13) aufweist, indem die Lichtdurchlässigkeit der Markierung (13) kleiner 60 % ist und somit die Strichplatte zum Ausrichten der Markierung (13) auf ein Objekt bei durch die Lichtquelle (3) befeuchteter und unbeleuchteter Markierung (13) geeignet ist.

2. Strichplatte nach Anspruch 1, **dadurch gekennzeichnet, daß** die Markierung (13) aus einem Amplitudengitter mit transparenten Lücken und opaken Stegen besteht.

3. Strichplatte nach Anspruch 2 , **dadurch gekennzeichnet, daß** die Stege aus Chrom bestehen.

4. Strichplatte nach Anspruch 1, **dadurch gekennzeichnet, daß** das Beugungsgitter der Markierung (13.6, 13.7, 13.8) ein Phasengitter ist.

5. Strichplatte nach Anspruch 4, **dadurch gekennzeichnet, daß** die gestufte Oberfläche des Phasengitters reflektierend und opak ausgebildet ist.

6. Strichplatte nach einem der vorhergehenden Ansprüche, **dadurch gekennzeichnet, daß** die Markierung (13.1, 13.2, 13.4, 13.5, 13.6; 13.3) kreisringförmig oder kreuzförmig ist.

7. Strichplatte nach einem der vorhergehenden Ansprüche, **dadurch gekennzeichnet, daß** auf dem Träger (2) außer der das Beugungsgitter aufweisenden Markierung (13) eine weitere Markierung (12) in Form eines opaken Bereiches vorgesehen ist.

8. Strichplatte nach Anspruch 7, **dadurch gekennzeichnet, daß** diese weitere Markierung (12) die Markierung (13) umgiebt.

9. Optische Einrichtung zum Beobachten eines Objektes, wobei im Beobachtungsstrahlengang eine beleuchtbare Markierung (13) vorgesehen ist, mit welcher die optische Einrichtung (4) auf einen Bereich des Objektes ausrichtbar ist, wobei die Markierung (13) als Beugungsgitter ausgebildet ist, so daß Licht einer seitlich angeordneten Lichtquelle (3) in Richtung des Beobachters gerichtet ist, und die Markierung (13) auch ohne Beleuchtung durch die Lichtquelle (3) einen hohen Kontrast zum Umfeld der Markierung (13) aufweist, indem die Lichtdurchlässigkeit der Markierung (13) kleiner 60 % ist und somit die Strichplatte zum Ausrichten der Markierung (13) auf das Objekt bei durch die Lichtquelle (3) befeuchteter und unbeleuchteter Markierung (13) geeignet ist.

10. Optische Einrichtung nach Anspruch 9, **dadurch gekennzeichnet, daß** zumindest eine erste Beugungsordnung des am Beugungsgitter gebeugten Lichtes der Lichtquelle (3) in Richtung des Beobachters gerichtet ist.

11. Optische Einrichtung nach Anspruch 9 oder 10, **dadurch gekennzeichnet, daß** die Markierung (13) auf einer Strichplatte (1) aufgebracht ist, welche in einem Zielfernrohr integriert ist.

**Claims**

1. Reticule comprising a support (2) and a marking (13), which is applied to a surface (O) of this support (2) and which radiates light of a laterally disposed light source (3) substantially perpendicular to the surface (O), wherein the marking (13) is configured as a diffraction grating, and the diffraction grating is dimensioned such that when looking at the surface (O), the marking (13) has a high contrast to the surround field of the marking (13) also without illumination by means of the light source (3) as a result of the light transmission of the marking (13) being less than 60%, and therefore the reticule is suitable for aligning the marking (13) to an object when the marking (13) is illuminated or not illuminated by means of the light source (3).

2. Reticule according to Claim 1, **characterised in that** the marking (13) comprises an amplitude grating with transparent cuts and opaque ties.

3. Reticule according to Claim 2, **characterised in that** the ties are made of chromium.

4. Reticule according to Claim 1, **characterised in that** the diffraction grating of the marking (13.6, 13.7, 13.8) is a phase grating.

5. Reticule according to Claim 4, **characterised in that** the stepped surface of the phase grating is reflective and opaque.

6. Reticule according to one of the preceding claims, **characterised in that** the marking (13.1, 13.2, 13.4, 13.5, 13.6; 13.3) is in the form of a circular ring or a cross.

7. Reticule according to one of the preceding claims, **characterised in that** besides the marking (13) with the diffraction grating, a further marking (12) in the form of an opaque region is provided on the support (2).

8. Reticule according to Claim 7, **characterised in that** this further marking (12) surrounds the marking ( 13).

9. Optical device for viewing an object, wherein an illuminated marking (13) is provided in the optical viewing path, with which the optical device (4) may be aligned to a region of the object, wherein the marking (13) is configured as a diffraction grating so that light of a laterally disposed light source (3) is directed in the direction of the observer, and the marking (13) has a high contrast to the surround field of the marking (13) also without illumination by means of the light source (3) as a result of the light transmission of the marking (13) being less than 60%, and therefore the reticule is suitable for aligning the marking (13) to the object when the marking (13) is illuminated or not illuminated by means of the light source (3).

10. Optical device according to Claim 9, **characterised in that** at least one first order of diffraction of diffracted light of the light source (3) is directed in the direction of the observer.

11. Optical device according to Claim 9 or 10, **characterised in that** the marking (13) is applied to a reticule (1), which is integrated in a sighting telescope.

**Revendications**

1. Réticule formé d'un support (2) et d'un repère appliqué sur une surface (O) dudit support (2), qui rayonne essentiellement perpendiculairement à la surface (O) la lumière d'une source lumineuse (3) disposée latéralement, dans lequel le repère (13) est conformé en réseau de diffraction, le réseau de diffraction est conçu de telle sorte que lorsqu'on observe la surface (O), le repère (13), même en l'absence d'éclairage par la source lumineuse (3), présente un contraste élevé par rapport à son environnement, la transparence du repère (13) étant inférieure à 60% et le réticule permettant d'aligner le repère (13) sur un objet que le repère (13) soit éclairé ou non par la source lumineuse (3).

2. Réticule selon la revendication 1, **caractérisé en ce que** le repère (13) est formé d'un réseau d'amplitude avec des fentes transparentes et des traits opaques.

3. Réticule selon la revendication 2, **caractérisé en ce que** les traits sont en chrome.

4. Réticule selon la revendication 1, **caractérisé en ce que** le réseau de diffraction du repère (13.6, 13.7, 13.8) est un réseau de phase.

5. Réticule selon la revendication 4, **caractérisé en ce que** la surface étagée du réseau de phase est réfléchissante et opaque.

6. Réticule selon une des revendications précédentes, **caractérisé en ce que** le repère (13.1, 13.2, 13.4, 13.5, 13.6 ; 13.3) a une forme d'anneau circulaire ou de croix.

7. Réticule selon une des revendications précédentes, **caractérisé en ce qu'**il est prévu sur le support (2), en plus du repère (13) présentant le réseau de diffraction, un repère (12) supplémentaire sous la forme d'une zone opaque.

8. Réticule selon la revendication 7, **caractérisé en ce que** le repère (12) supplémentaire entoure le repère (13).

9. Système optique pour l'observation d'un objet, dans lequel il est prévu, sur le trajet du faisceau d'observation, un repère (13) pouvant être éclairé, à l'aide duquel le système optique (4) peut être dirigé sur une zone de l'objet, dans lequel le repère (13) est conformé en réseau de diffraction, de telle sorte que la lumière d'une source lumineuse (3) disposée latéralement soit renvoyée vers l'observateur, dans lequel le repère (13), même en l'absence d'éclairage par la source lumineuse (3), présente un contraste élevé par rapport à l'environnement du repère (13), la transparence du repère (13) étant inférieure à 60% et le réticule permettant d'aligner le repère (13) sur un objet que le repère (13) soit éclairé ou non par la source lumineuse (3).

10. Système optique selon la revendication 9, **caractérisé en ce qu'**au moins un premier ordre de diffraction de la lumière de la source lumineuse (3) diffractée par le réseau de diffraction est dirigé vers l'observateur.

11. Système optique selon la revendication 9 ou 10, **caractérisé en ce que** le repère (13) est appliqué sur un réticule (1) intégré dans une lunette de visée.

FIG. 1

FIG. 2

FIG. 3

FIG. 4

## FIG. 5

## FIG. 6

FIG. 7

FIG. 8

## FIG. 9

## FIG. 10

FIG. 11